(19) Europäisches Patentamt
European Patent Office
Office européen des brevets

(11) Publication number: 0 292 563 B1

(12) # EUROPEAN PATENT SPECIFICATION

(45) Date of publication of patent specification: 24.07.91 Bulletin 91/30

(51) Int. Cl.$^5$: B60C 3/04, B60C 9/28, B60C 11/00, B29D 30/06, B29D 30/72

(21) Application number: 87906793.2

(22) Date of filing: 17.10.87

(86) International application number: PCT/JP87/00805

(87) International publication number: WO 88/03094 05.05.88 Gazette 88/10

(54) RADIAL TIRE FOR PASSENGER CARS AND PRODUCTION THEREOF.

(30) Priority: 22.10.86 JP 252465/86
22.01.87 JP 13408/87

(43) Date of publication of application: 30.11.88 Bulletin 88/48

(45) Publication of the grant of the patent: 24.07.91 Bulletin 91/30

(84) Designated Contracting States: DE FR GB

(56) References cited:
GB-A- 2 024 738
GB-A- 2 148 806

(73) Proprietor: SUMITOMO RUBBER INDUSTRIES LIMITED
No. 1-1, Tsutsui-cho 1-chome
Chuo-ku Kobe-shi Hyogo 651 (JP)

(72) Inventor: NOMA, Hiroyuki
16-3, Suzurandai Kitamachi 3-chome
Kita-ku Kobe-shi Hyogo 651-11 (JP)
Inventor: TAKEHARA, Kenji
4-5-208, Honjoucho 1-chome
Higashi Nada-ku Kobe-shi Hyogo 658 (JP)
Inventor: FUJIWARA, Kenichi
27, Nishi Jiyuugaoka 2-chome
Shijimi-cho Miki-shi Hyogo 673-05 (JP)

(74) Representative: Stewart, Charles Geoffrey
SP TYRES UK LIMITED Tyre Technical Division
Fort Dunlop Birmingham B24 9QT (GB)

EP 0 292 563 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Jouve, 18, rue Saint-Denis, 75001 PARIS

## Description

The present invention relates to a radial tyre and a method of manufacturing the same, in which the radially outward deformation of the shoulder portions, when inflated to the standard internal pressure, is larger than that of the crown portion therebetween to improve tyre performance factors such as resistance to wear, resistance to uneven wear and fuel economy.

These days, radial tyres having carcass cords arranged substantially at right angles to the equatorial plane are widely used to give superior characteristics in wear resistance, steering stability etc. In such a radial tyre, a hoop effect is provided by a so-called a belt layer having a relatively large stiffness which is formed by arranging plies of organic or metallic cords around the circumference of the carcass at a relatively small angle to the equatorial plane of the tyre.

In such a radial tyre, the shape of its internal cavity has been designed so as to have a spontaneously balanced shape, in which no distortion occurs in the carcass, when the standard internal pressure is applied.

The spontaneously balanced shape, here, is a carcass profile obtained by the spontaneously balanced shape theory, which was presented by W. Hofferberth in Kautsch. Gummi (8-1955, 124 to 130). This theory, on the assumption that the belt layer is a stiff ring which is not deformed by the increase of the internal pressure, provides a form or shape of a carcass between the belt layer and bead cores to generate no deformation from the sidewall portion to the bead portion with increase in internal pressure, primarily by using a vulcanising mould.

The carcass profile based on this spontaneously balanced shape theory is intended to form no deformation due to the increase of the internal pressure, that is, to apply the tension evenly on the carcass cords.

This theory of Hofferberth was presented on bias tyres but it was extended by Akasaka in "Sectional Shape of Radial Tyres" (J Japan Society of Complex Material, Vol. 3, 4, 1977, 140 to 154) so as to be suited also for radial tyres.

It is preferable to subsidiarily add at least the following two points on the application of the spontaneously balanced shape theory.

Firstly, even if the belt layer is composed of metallic cords or others, it is actually not a completely stiff body and a slight deformation occurs with the internal pressure. The belt layer tends to be deformed by the pressure of the carcass from internal pressurisation particularly if it is a low aspect ratio tyre.

Secondly, since the bead portion is stiff owing to the turnup portion of the carcass, bead apex and other reinforcement layer, the spontaneously balanced shape theory does not hold true in the region from the bead core to the deflection point of the carcass profile usually called the rim point which is the equivalent bead position. Hence a curve according to the theory should be plotted by setting the start point at the said equivalent bead position.

As described above, the spontaneously balanced shape theory employed in conventional tyres is a theory to make a curve which avoids a change of shape and generates a uniform tensile force in the carcass even when the carcass profile of the tyre from the vulcanising mould (called moulded tyre hereinafter in this specification) is assembled onto a standard rim and subjected to the standard internal pressure. In this theory, the width of clip rings for the moulded tyre in the vulcanising mould, that is, the length between the outer surfaces of the bead bases is set equal to the width of the standard rim.

In the Japanese Patent TOKKYO KOHO No. 61-28521, an example in which the clip ring width in the moulded tyre is different from the width of rim is proposed. In such a tyre, however, a carcass profile, obtained by numerically converting the clip ring width into a rim width and applying the spontaneously balanced shape theory, becomes substantially equal to the carcass profile after applying an internal pressure. Thus the case in which only the clip ring width is set so as to be different from the rim width is included in the scope of the spontaneously balanced shape theory.

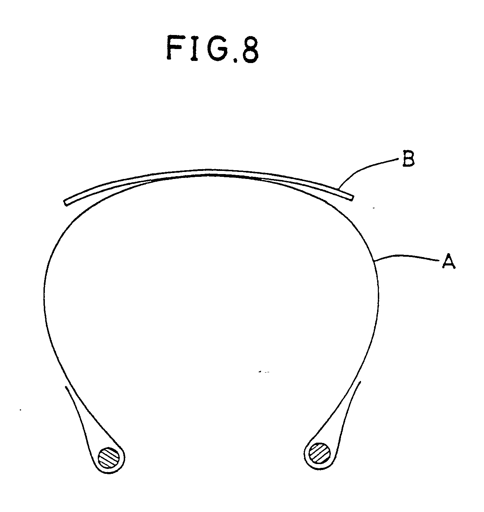

But in such a radial tyre having a carcass profile according to the spontaneously balanced shape theory, and in particular in a tyre having a relatively high aspect ratio for which the carcass profile becomes closer to a circle, as shown in Fig. 8, between the carcass A and belt layer B, especially around the end part of the belt layer B, the radially outward deformation of the shoulder portion of the carcass A is small even under standard internal pressure. In the spontaneously balanced shape theory, it is assumed that the carcass is not extended due to the application of pressure, but in reality, the carcass extends slightly and a carcass profile according to the spontaneously balanced shape theory is swollen in almost the same shape so that the bonding power between the carcass A and the belt layer B due to the internal pressure, becomes very little larger than the bonding power when not pressurised and it is therefore inferior to the restraint between the carcass A and the belt layer B.

Consequently, the tension working on the carcass A hardly acts on the belt layer B, especially around its edges, so that the belt layer B cannot exert its required hoop effects.

As a result, the surface shape of the tread at the shoulder portion tends to be uneven, and uneven wear occurs because of this decrease of restraint by the belt layer B and resultant lessened resistance to wear. In addition, during rotation of the tyre, due to the increase of the bending forces in the radial direction applied to the belt layer B, the stress applied to the belt layer increases, so that the rolling resistance is also magnified and the fuel economy is reduced.

A radial tyre according to the preamble of claim 1 is known, e.g. from EP-A-0194108.

It is hence a primary object of thus invention to provide a radial tyre for passenger cars and a method of manufacturing the same which is designed so that the deformation at the shoulder portion due to an increase of internal pressure becomes larger than the deformation at the crown portion therebetween so that the radius of curvature of the tread surface at lower internal pressure becomes larger than that at standard internal pressure, wherein, by increasing the hoop effect of the belt layer B by applying the tension of the carcass A effectively thereto the characteristics of resistance to wear and resistance to uneven wear are enhanced, and at the same time, the rolling resistance is reduced so as to upgrade the fuel economy.

Accordingly the present invention provides a radial tyre for passenger cars having the features recited in independent claim 1.

The invention also provides a method of manufacturing radial tyres for passenger cars according to the present invention having the features recited in claims 3 and 4.

The invention will be described with relation to the following drawings in which :

Fig. 1. is a sectional view showing an embodiment of the tyre of the present invention

Fig. 2. is a diagram showing the deformation of the tread portions by the application of standard internal pressure

Fig. 3. is a sectional view showing the shoulder portion in detail

Fig. 4. is a sectional view showing an embodiment of the manufacturing method of the present invention

Fig. 5 is diagram explaining the spontaneously balanced shape theory.

Figs. 6 & 7 are diagrams showing the results of wear tests ; and

Fig. 8 is a diagram showing a tyre of conventional structure simply by a carcass and a belt layer.

In fig. 1, a radial tyre 1 for passenger cars comprises bead portions 3, 3 on both sides through each of which passes a bead core 2, sidewall portions 4, 4 extending from the bead portion 3 outwardly in the radial direction, a tread portion 5 across both ends of the sidewall and a main carcass 6, which is folded around the bead cores 2 from the inside to the outside thereof and passes through the sidewall portions 4 and tread portion 5. The tread portion 5 is provided with a belt layer 7 outside the carcass 6. In addition, bead apexes 9 are provided between the main part of the carcass 6 and its folded-over portions. This radial tyre 1 for passenger cars is shown assembled on a standard rim 10.

The above-mentioned carcass 6 has one to three radial carcass plies of organic cords arranged at angles between 80 and 90 degrees to the equatorial plane CO of the tyre. For the cord material nylon, polyester, rayon, aromatic polyamide or others may be employed.

The above mentioned belt layer 7 is a two ply structure in this embodiment. A first ply, 7A located on the carcass side and a second ply 7B arranged outside the first one. The cords of the plies 7A and 7B are composed of metal cords and are arranged at relatively small angles to the equatorial plane CO of the tyre with the cords of each ply in opposite directions to the other adjacent ply. The first ply 7A is wider than the second ply 7B and both ends of the first ply 7A extend beneath the edges a of the tread portion 5.

The radial tyre 1 of this embodiment is formed in a slightly flat shape so that the ratio of the distance from the lower end of the bead portion 3 to the top of the tread surface 12 which is the outer face of the tread 5, that is, the sectional height of the tyre DT to the tyre width W is less than 1.0, for example, about 0.9 inflated to standard internal pressure.

The tyre 1 assembled on its standard rim is deformed according to increasing internal pressure as shown in Fig. 2 so that the radius of curvature RT1 of the tread surface 12 at 10% of the standard internal pressure is increased to the radius of curvature RT2 of the tread surface 12 when the standard pressure is added. That is, it deforms so that the difference DC-DS between the outer diameter DC of the tyre at the above mentioned maximum height point B and the outer diameter DS of the tyre at the above mentioned edge portion a becomes smaller. The deformation or outward swelling of the shoulder portions on both sides is thereby made larger in comparison with the crown portion 12A at the centre of the tread surface 12. As a result, the carcass 6 pushes up the belt layer especially around its edge portions with the increase in internal pressure. The bonding power of the carcass 6 and the belt layer 7 is thus enhanced, so that it causes the tensile force applied on the carcass to act on the belt layer 7 in particular in its edge portions, and the hoop effect of the belt layer 7 is hence increased.

The ratio of radii RT2/RT1 is here set somewhere between 1.10 and 1.40. If the radio of the radii RT2/RT1 is larger than 1.4, the outward deformation of the shoulder portion becomes so large that an excessive tensile

force is applied on the carcass 6, its durability is then reduced and the tension of the tread rubber is also increased, which tends to cause fatigue cracks and splits. In contrast, when the ratio of the radii is smaller than 1.10, the push-up of the carcass 6 to the belt layer 7 is insufficient so that the effects described above cannot occur.

In addition, the shoulder portion 6A of the carcass 6 passing beneath the tread shoulder portion 12B is deformed so that the radius of curvature under the standard internal pressure becomes smaller compared to the case of 10% pressure. This helps push up the shoulder portion 12B by the application of the standard internal pressure and the increase in radius of curvature of the tread surface 12 due to the pressurisation.

The ratio of radii RC2/RC1 is set between 0.65 and 0.85. When the ratio of radii RC2/RC1 is smaller than 0.65, the carcass is bent excessively, and in the same way as described above, its tension becomes so large as to lessen the durability of the tyre due to the fatigue. On the contrary, when it is larger than 0.85, the push up to the belt layer 7 by the carcass 6 is reduced, and the above mentioned effects are not obtained.

The radii RC1/RC2 at the shoulder portion 6A at individual internal pressures are expressed or found as shown in Fig. 3 by the radius of a circle passing through the following three points : a point P1 where a perpendicular d through above mentioned edge portion a and forming a right angle with the direction of the tyre axis crosses with the carcass, a point P2 where a perpendicular e passing a point dividing half of tread width into halves, that is, a point to divide the distance from the maximum height point b to the edge point a into two equal lengths crosses with the carcass, and a point P3 where a perpendicular f parallel to the axis of the tyre and passing through the maximum width point of the tyre crosses with the carcass 6. Here, when the tread is in a shape having a curvature at the edge part of the tread, the position of the edge portion a is determined as the cross section of an extended face of the tread surface 12 and an extended face of the surface at the sidewall portion 4.

As the tyre is constructed in such a matter, it deforms so that the radius of curvature of the tread surface 12 increases with application of the standard internal pressure. Thus at the same time, the resistance to wear is enhanced and the rolling resistance is reduced due to an increase of the hoop strengthening effect. Moreover, the fuel economy is improved. Such deformation of the carcass 6 causes the tensile force at the shoulder portion 6A to increase, and helps to increase the tension acting on the belt layer 7.

Moreover, the ratio RT2/DB between the radius of curvature RT2 to the outer diameter DB of the belt layer 7 under the standard internal pressure is not less than 0.42.

By setting the radius of curvature of the tread surface 12 at the standard internal pressure in this way, the tread surface 12 has a relatively large arc and the shoulder portion 12B can be deformed outwardly.

The standard internal pressure in this invention means the internal pressure applied on the tyre in the conditions during standard usage within a range of 10% above or below said pressure.

The tyre according to the present invention can be variously modified, for example, by providing a reinforcing layer (not shown) to reinforce the bead portion, by changing the number of plies in the belt layer 7 or by making the outer ply 7B in a wider width.

As explained, the radial tyre for passenger cars of this invention is designed so that the radius of curvature of the tread surface under the standard internal pressure becomes larger than when the tyre is under a specified lower internal pressure.

The ground contacting property of the tread, therefore, is enhanced and is reduced.

Besides, the deformation of the shoulder portions outwardly in the radial direction of the tyre is larger than in the conventional tyres and so the bonding power of the carcass and the belt layer is increased and the hoop effect of the belt layer is increased.

It follows that the movement of the shoulder portions in use of the tyre is inhibited and stabilised, and that uneven wear such as shoulder wear is prevented, and the useful life of the tyre therefore is extended.

Moreover, a variety of effects can be obtained by the increase of stiffness of the shoulder portions such as lessening of rolling resistance to cause enhancement of fuel economy, and improvements of the cornering power to bring about an improved steerability.

An embodiment of the method of manufacturing the radial tyre for passenger cars of the present invention is explained below again referring to the drawings.

In fig. 4, the maximum width WA of the carcass 6A (indicated by a solid line) of a moulded tyre 1A in the vulcanising mould 20 is set longer than the maximum width WB of the carcass 6B (indicated by a broken line) obtained by the spontaneously balanced shape theory, and the height HA in the radial direction from a bead base 3A of the bead portion 3 of the moulded tyre 1A to the position CA where the width of the carcass 6A becomes maximum is set shorter than the height HB in the radial direction from the bead base 3A to the position CB of the maximum width in the carcass 6B in the spontaneously balanced shape theory.

The carcass 6A of the moulded tyre 1A, meanwhile, describes a curve starting from an intersection DA (described hereinafter) near an edge d of the belt layer 7, passing the radially inner side of a curve obtained

by the above mentioned spontaneously balanced shape theory and crossing with the curve at a position radially outside the position CA with the maximum width, and ending at the position CA of the maximum width.

Additionally in this embodiment, the moulded tyre 1A is designed so that the clip ring width BA is substantially the same length as the distance between the flanges 11, 11 of the standard rim 10. On the other hand, when based on the spontaneously balanced shape theory, a carcass profile is obtained from the following equation.

$$Z = \int_{r}^{rD} \frac{r^2 - rC^2}{\sqrt{(rD^2 - rC^2)^2 / \sin^2 \phi D - (r^2 - rC^2)^2}} dr \quad \ldots 1$$

where the symbols are as indicated in Fig. 5, point D a crossing point where a perpendicular X from the edge d of the belt layer 7 to the tyre axis Z, that is, axis Z in this embodiment crosses with the carcass 6B.

point C a point at the maximum width of the carcass,

r a height from the axis Z in the radial direction, of the tyre (an axis r in this embodiment),

rC a height from the axis Z to the point C on the carcass 6B in the radial direction.

rD a height from the axis Z to the point D of the carcass 6B in the radial direction, and

$\phi$D an angle formed by a normal Y of the carcass 6B at the intersection D with the axis Z.

The axis Z, here can be replaced by a line passing the bead bottom 3A horizontally.

The equation (1) is obtained when assuming that the carcass 6B describes an arc at least near the edge d of the belt layer 7.

The equation (1) is, furthermore, obtained when setting an intersection 0 of the axis r passing the intersection D and the axis Z as the origin, so that a deflection from the axis r in the horizontal direction, that is, a value Z can be calculated by giving the height r, and a curve depending on the spontaneously balanced shape theory is thus obtained.

Further to the above, the bead portion 3 has a relatively large bending stiffness owing to the folded over part of the carcass, bead apex, and reinforcing layer, and the spontaneously balanced shape theory therefore, has to be applied to the range from the upper end of the zone having a large stiffness, that is, the equivalent bead position B through the point C to the intersection D.

Around the equivalent bead position B, the curve below it is formed as an inwardly convex arc which is smoothly joined with the outwardly convex arc above the position B which is obtained by the spontaneously balanced shape theory, so that the point B plays the role of a point of deflection, that is, a rim point.

In this way, in the spontaneously balanced shape theory, as apparent from the equation (1), a curve is determined when the positions of the heights rC and rD and the angle oD are given. At this time, if the value z of the point C is preliminary given, by determining either one of the angle * D or the height rC, the other one can be obtained.

To the contrary for the carcass profile of the present invention a manufacturing method is used in which the carcass profile is formed with a lower part having a swollen shape by setting the height HA from the bead bottom 3A to the position CA with the maximum width of the carcass 6A in the radial direction less than the height HB from the bead bottom 3B in the spontaneously balanced shape theory as explained above.

The ratio HA/HB of the height HA to the height HB is, here, set between 0.85 and 0.9.

This height HA is located in a range of 40 to 48% with regard to the sectional height DT of the tyre.

In the moulded tyre 1Am furthermore, the maximum width WA of the carcass 6A is set greater than the maximum width WB in the spontaneously balanced shape theory and the ratio WA/WB is set in the range of 1.01 to 1.04, preferably between 1.015 and 1.025.

By setting things in such a way, the carcass profile from the position CA of the maximum width of the moulded tyre 1A to the equivalent bead position B becomes an underpart swollen shape intentionally formed to be different from the carcass profile obtained by the spontaneously balanced shape theory.

In addition, in the moulded tyre 1A, as described above, the carcass 6A described a curve passing the inner side in the radial direction of the curve obtained by the spontaneously balanced shape theory from the intersection DA of the perpendicular X from the edge of the belt layer 7 and the carcass 6A, crossing with the curve at the outer position in the radial direction of the position CA with the maximum width and reaching up to the position CA of the maximum width. Also the carcass 6A of the moulded tyre 1A is formed so that its length becomes substantially equal to that of the carcass 6B obtained by the spontaneously balanced shape theory.

Then by setting the ratio of the maximum width WA/WB at 1.01 to 1.04 and the ratio of the height HA to HB at 0.85 to 0.95, and moreover, by appropriately determining the tread surface shape of the vulcanising mould

20 and the belt layer shape, the ratio of radii RT2/RT1 can be set somewhere between 1.10 and 1.40.

Such a carcass profile can be produced not only by use of a specific vulcanising mould 20 of which the internal cavity is formed by adding necessary rubber gauges on the carcass profile at some parts, but also by use of a conventional vulcanising mould having an internal cavity according to the spontaneously balanced shape theory by changing the distribution of the rubber gauges in the sidewall region.

The carcass profile, here, means the curve connecting the centres of the thickness of the carcass ply, and when using plural plies, it is defined to be the curve passing through the centre points of the overall thickness.

When taking the moulded tyre 1A from the vulcanising mould 20, mounting it on the standard rim 10, and applying the 10% pressure of the standard internal pressure, the tyre reproduces the shape almost the same as that in the vulcanising mould 20.

On the basis of the fact that the upper part of the moulded tyre 1A from the position CA of the maximum width to the intersection DA describes an arc having a longer radius than the upper part of the carcass profile obtained by the spontaneously balanced shape theory, as known from Fig. 1, the upper part of the carcass profile of the moulded tyre 1A passes inside the upper part of the curve by the spontaneously balanced shape theory. The carcass profile in such a shape deforms, as the internal pressure increases, so that the stresses generated on some parts make a balance with the stresses from the internal pressures acting on some parts, which becomes approximately the curve usually obtained by the spontaneously balanced shape theory. As the radius of curvature at the upper part decreases, that is, as an arc having the radius of curvature RC1 at the intersection DA deforms into an arc having a shorter radius of curvature RC2 which is near radius of curvature depending on the spontaneously balanced shape theory, the shoulder portion 12B is pushed up by the application of the standard internal pressure, and the radius of curvature of the tread surface caused by the pressurisation is increased.

As is described above, the method of manufacturing the radial tyre for passenger cars of this invention is based on intentionally deflecting both the position of the carcass maximum width and the height of the moulded tyre in the vulcanising mould from those of the carcass profile obtained by the spontaneously balanced shape theory.

To provide comparison test tyres we were produced according to the present invention and the spontaneously balanced shape theory. The value at some points were measured under the standard internal pressure and under 10% pressure, and in addition, the rolling resistances and the resistances to wear were compared.

The tyres of embodiments 1 and 2 had carcass profiles of the present invention produced according to the specifications shown in Table 1, and the tyres of comparative examples 1 and 2 had carcass profiles depending on the spontaneously balanced shape theory.

The tyres of embodiment 1 and comparative example 1 were structured as shown in Fig. 1 in a size of 5.60R13, and they were assembled onto a standard rim 4J × 13.

The standard internal pressure was 2.0 kg/sq.mm and the 10% pressure was 0.2 kg/sq.mm. The size of the tyres in embodiment 2 and comparative example 2 was both 6.40R14.

Table 1 shows the specifications of the tyres in embodiments 1 and 2, and the values calculated by the spontaneously balanced shape theory.

Table 2 shows the values of individual parts and the indexes of rolling resistance under the standard pressure and 10% pressure. In Table 2, where values are given both inside and outside parenthesis, the values outside the parenthesis denote the distribution of the data. The index of rolling resistance was obtained by loading the tyre against a drum with a diameter of 1707 mm measuring the number of coasting revolutions from a specified speed (80 km/h) to a halt, and expressing each compared to the value of comparative example 1 taken as 100.

Fig. 4 shows the results of an accelerated wear test of 8000 km fitted to passenger cars with a displacement of 1800 cc. The results proved that the wear was reduced in the tyres of embodiments.

Fig. 5. shows the wear of the tyres at the edge a of the tread surface 12, that is, the shoulder wear.

Likewise, the data indicate that the tyres of the embodiments are superior.

This invention can be effectively applied to radial tyres having a variety of structures, tread patterns and sizes.

Table 1

| | | | Embodiment 1 | Embodiment 2 |
|---|---|---|---|---|
| Tire size | | | 5.60R13 | 6.40R14 |
| Structure | Carcass | | 2 plies (nylon) | See left. |
| | Breaker | | 2 plies (steel) | See left. |
| | Reinforcing layer | | 2 plies (nylon) | See left. |
| Molded tire | Maximum width of carcass | WA | 151.0 | 172.0 |
| | Height of maximum width | HA | 56.0 | 64.5 |
| | Sectional height of tire | T | 135.7 | 153 |
| Values by the spontaneously balanced shape theory | | | | |
| | Maximum width of carcass | WB | 148.0 | 169.0 |
| | Height of maximum width | HB | 61.0 | 69.5 |
| Ratio of maximum widths | | WA/WB | 1.020 | 1.018 |
| Ratio of heights | | HA/HB | 0.918 | 0.928 |

Table 2

| | Comparative example 1 | Embodiment 1 | Comparative example 2 | Embodiment 2 |
|---|---|---|---|---|
| Radius of curvature of tread surface under 10% pressure RT1 | 185 | 225 | 230 | 255 |
| Radius of curvature of tread surface under standard pressure RT2 | 200 | 280 (250 - 310) | 240 | 310 (280 - 340) |
| Ratio RT2/RT1 | 1.08 | 1.24 (1.11-1.38) | 1.04 | 1.22 (1.1 - 1.33) |
| Radius of curvature of carcass shoulder portion under 10% pressure RC1 | 55 | 65 | 55 | 85 |
| Radius of curvature of carcass shoulder portion under standard pressure RC2 | 50 | 50 | 50 | 60 |
| Ratio RC2/RC1 | 0.91 | 0.77 | 0.91 | 0.76 |
| RT2/ Outer diameter of belt layer DE | 0.35 | 0.49 | 0.38 | 0.49 |
| Rolling resistance index | 100 | 115 (110-120) | 100 | 115 (110-120) |

## Claims

1. A radial tyre for passenger cars, which comprises a carcass (6) composed of at least one ply of cords arranged in the radial direction and a breaker belt layer composed of inextensible cords, and the tyre when mounted on a standard rim (10) has a ratio of radii RT2/RT1 between a radius of curvature RT1 of a tread surface at the time when a low percentage of the standard internal pressure is applied and a radius of curvature RT2 of the tread surface at the time when the standard internal pressure is applied, which is larger than 1.0 and the ratio of radii RC2/RC1 between a radius of curvature (RC1) of the shoulder portions of the carcass passing near the tread shoulder portion when the low percentage pressure is applied and a radius of curvature RC2 when the standard internal pressure is applied, is smaller than 1.0, characterised by the combination of the carcass ply cord being selected from a group of extensible organic fibre cords consisting of nylon, polyester or rayon cords, the tyre being vulcanised in a mould such that the maximum width (WA) of the carcass profile (6A) in the vulcanising mould (20) is larger than the maximum width (WB) of a carcass profile (6B) obtained from the spontaneously balanced shape theory, and the height (HA) in the radial direction from a bead base to the point (CA) at the maximum width (WA) of the carcass profile in the vulcanizing mould is shorter than the height (HB) in the radial direction from the bead base to the point (CB) at the maximum width (WB) of the carcass profile obtained by the spontaneously balanced shape theory the low percentage pressure is 10% of the standard internal pressure, said ratio $RT_2/RT_1$ is between 1.10 and 1.40 and said ratio $RC_2/RC_1$ is between 0.65 and 0.85.

2. A radial tyre for passenger cars as set forth in Claim 1, characterised in that the ratio RT2/DB between the radius of curvature RT2 under the standard internal pressure and an outer diameter DB of a belt layer arranged outside the carcass in the radial direction of the tyre under the standard internal pressure is not less than 0.42.

3. A method of manufacturing the radial tyre of Claim 1 or 2 characterised in that the tyre is moulded in a vulcanising mould (20) to a profile in which the maximum width (WA) of the carcass (6A) is larger than the maximum width (WB) of the carcass profile (6B) obtained from the spontaneously balanced shape theory, and the height (HA) in the radial direction from a bead base to the point (CA) at the maximum width (WA) of the carcass profile is shorter than the height (HB) in the radial direction from the bead base to the point (CB) at the maximum width (WB) of the carcass profile obtained by the spontaneously balanced shape theory.

4. A method according to Claim 3 characterised in that the mould has a clip ring width (BA) which is substantially the width between the flanges (11, 11) of the standard rim for the tyre.

## Patentansprüche

1. Radialreifen für Personenwagen, welcher umfaßt eine aus mindestens einer Lage von in Radialrichtung angeordneten Korden zusammengesetzte Karkasse (6) und eine aus undehnbaren Korden zusammengesetzte Gürtelschicht, wobei der auf eine Standardfelge (10) aufgezogene Reifen ein Radienverhältnis RT2/RT1 besitzt zwischen einem Krümmungsradius RT1 einer Laufstreifen-Oberfläche zu dem Zeitpunkt, wenn ein niedriger Prozentsatz des Standard-Innendrucks angelegt ist, und einem Krümmungsradius RT2 der Laufstreifenfläche zu dem Zeitpunkt, wenn der Standard-Innendruck angelegt ist, welches größer als 1,0 ist, und das Radienverhältnis RC2/RC1 zwischen einem Krümmungsradius RC1 der in der Nähe des Laufstreifenschulterabschnitts vorbeitretenden Schulterabschnitte der Karkasse bei angelegtem niedrigem Druck-Prozentsatz und einem Krümmungsradius RC2 bei angelegtem Standard-Innendruck kleiner als 1,0 ist, gekennzeichnet durch die Kombination, daß die Karkasslagenkorde ausgewählt sind aus einer Gruppe von dehnbaren organischen Faserkorden, die besteht aus Nylon-, Polyester- und Rayon-Korden, daß der Reifen in einer solchen Form vulkanisiert ist, daß die maximale Breite (WA) des Karkassprofils (6A) in der Vulkanisierform (20) größer als die maximale Breite (WB) des Karkassprofils (6B) ist, welche nach der Theorie der spontan ausgeglichenen Form erhalten wird, und die Höhe (HA) in Radialrichtung von einem Wulstgrund zu der Stelle (CA) an der Maximalbreite (WA) des Karkassprofils in der Vulkanisierform geringer als die Höhe (HB) in Radialrichtung von dem Wulstgrund zu der Stelle (CB) an der maximalen Breite (WB) des nach der Theorie der spontan ausgeglichenen Form erhaltenen Karkassprofils ist, und daß der niedrige Druckprozentsatz 10% des Standard-Innendrucks beträgt, das Verhältnis RT2/RT1 zwischen 1,10 und 1,40 liegt und das Verhältnis RC2/RC1 zwischen 0,65 und 0,85 liegt.

2. Radialreifen für Personenwagen nach Anspruch 1, dadurch gekennzeichnet, daß das Verhältnis RT2/DB zwischen dem Krümmungsradius RT2 bei Standard-Innendruck und einem Außendurchmesser DB einer in

Radialrichtung des Reifens außerhalb der Karkasse angeordneten Gürtelschicht unter Standard-Innendruck nicht kleiner als 0,42 ist.

3. Verfahren zum Herstellen des Radialreifens nach Anspruch 1 oder 2, dadurch gekennzeichnet, daß der Reifen in einer Vulkanisierform (20) zu einem Profil vulkanisiert wird, bei dem die maximale Breite (WA) der Karkasse (6A) größer als die maximale Breite (WB) des Karkassprofils (6B) ist, das nach der Theorie der spontan ausgeglichenen Form erhalten wird, und die Höhe (HA) in Radialrichtung von einem Wulstgrund zu der Stelle (CA) bei der maximalen Breite (WA) des Karkassprofils geringer als die Höhe (HB) in Radialrichtung von dem Wulstgrund zu der Stelle (CB) bei der maximalen Breite (WB) des nach der Theorie der spontan ausgeglichenen Form erhaltenen Karkassprofils ist.

4. Verfahren nach Anspruch 3, dadurch gekennzeichnet, daß die Form eine Clipringbreite (BA) besitzt, die im wesentlichen die Breite zwischen den Hörnern (11, 11) der Standardfelge für den Reifen ist.

## Revendications

1. Pneumatique à carcasse radiale destiné à des véhicules de transport de passagers, le pneumatique comprenant une carcasse (6) composée d'au moins une nappe de câblés disposés dans la direction radiale et d'une couche de ceinture de sommet composée de câblés inextensibles, le pneumatique, lorsqu'il est monté sur une jante normale (10) ayant un rapport des rayons RT2/RT1 du rayon de courbure RT1 de la surface de la bande de roulement au moment où un faible pourcentage de la pression interne normale est appliqué et du rayon de courbure RT2 de la surface de la bande de roulement au moment où la pression interne normale est appliquée, qui est supérieur à 1,0, un rapport des rayons RC2/RC1 d'un rayon de courbure (RC1) des parties d'épaulement de la carcasse, passant près de la partie d'épaulement de la bande de roulement lorsqu'un faible pourcentage de pression est appliqué et d'un rayon de courbure RC2 obtenu lorsque la pression interne normale est appliquée, qui est inférieur à 1,0, caractérisé par la combinaison de propriétés selon laquelle les câblés des nappes de carcasse sont choisis dans un groupe de câblés de fibres organiques extensibles constitués de câblés de "Nylon", de polyester ou de rayonne, le pneumatique étant vulcanisé dans un moule afin que la largeur maximale (WA) du profil de carcasse (6A) dans le moule de vulcanisation (20) soit supérieure à la largeur maximale (WB) d'un profil de carcasse (6B) obtenu à l'aide de la théorie de la forme spontanément équilibrée, la hauteur (HA) en direction radiale, à partir d'une base de talon jusqu'au point (CA) de largeur maximale (WA) du profil de carcasse dans le moule de vulcanisation soit inférieure à la hauteur (HB), dans la direction radiale, mesurée de la base de talon jusqu'au point (CB) de largeur maximale (WB) du profil de carcasse obtenu par utilisation de la théorie de la forme spontanément équilibrée, le faible pourcentage de pression étant égal à 10% de la pression interne normale, le rapport RT2/RT1 soit compris entre 1,10 et 1,40 et le rapport RC2/RC1 soit compris entre 0,65 et 0,85.

2. Pneumatique à carcasse radiale pour véhicules de transport de passagers selon la revendication 1, caractérisé en ce que le rapport RT2/DB du rayon de courbure RT2 obtenu pour la pression interne normale et d'un diamètre externe DB d'une couche de ceinture placée en dehors de la carcasse dans la direction radiale du pneumatique, à la pression interne normale, n'est pas inférieur à 0,42.

3. Procédé de fabrication du pneumatique à carcasse radiale selon la revendication 1 ou 2, caractérisé en ce que le pneumatique est moulé dans un moule de vulcanisation (20) avec un profil dans lequel la largeur maximale (WA) de la carcasse (6A) est supérieure à la largeur maximale (WB) du profil de carcasse (6B) obtenu à partir de la théorie de la forme spontanément équilibrée, et la hauteur (HA), en direction radiale, comprise entre une base de talon et le point (CA) de largeur maximale (WA) de profil de carcasse est inférieure à la hauteur (HB), en direction radiale, mesurée de la base du talon au point (CB) de largeur maximale (WB) du profil de carcasse, obtenue d'après la théorie de la forme spontanément équilibrée.

4. Procédé selon la revendication 3, caractérisé en ce que le moule a une largeur (BA) de bague de serrage qui est sensiblement égale à la largeur mesurée entre les flasques (11, 11) de la jante normale destinée au pneumatique.

FIG.1

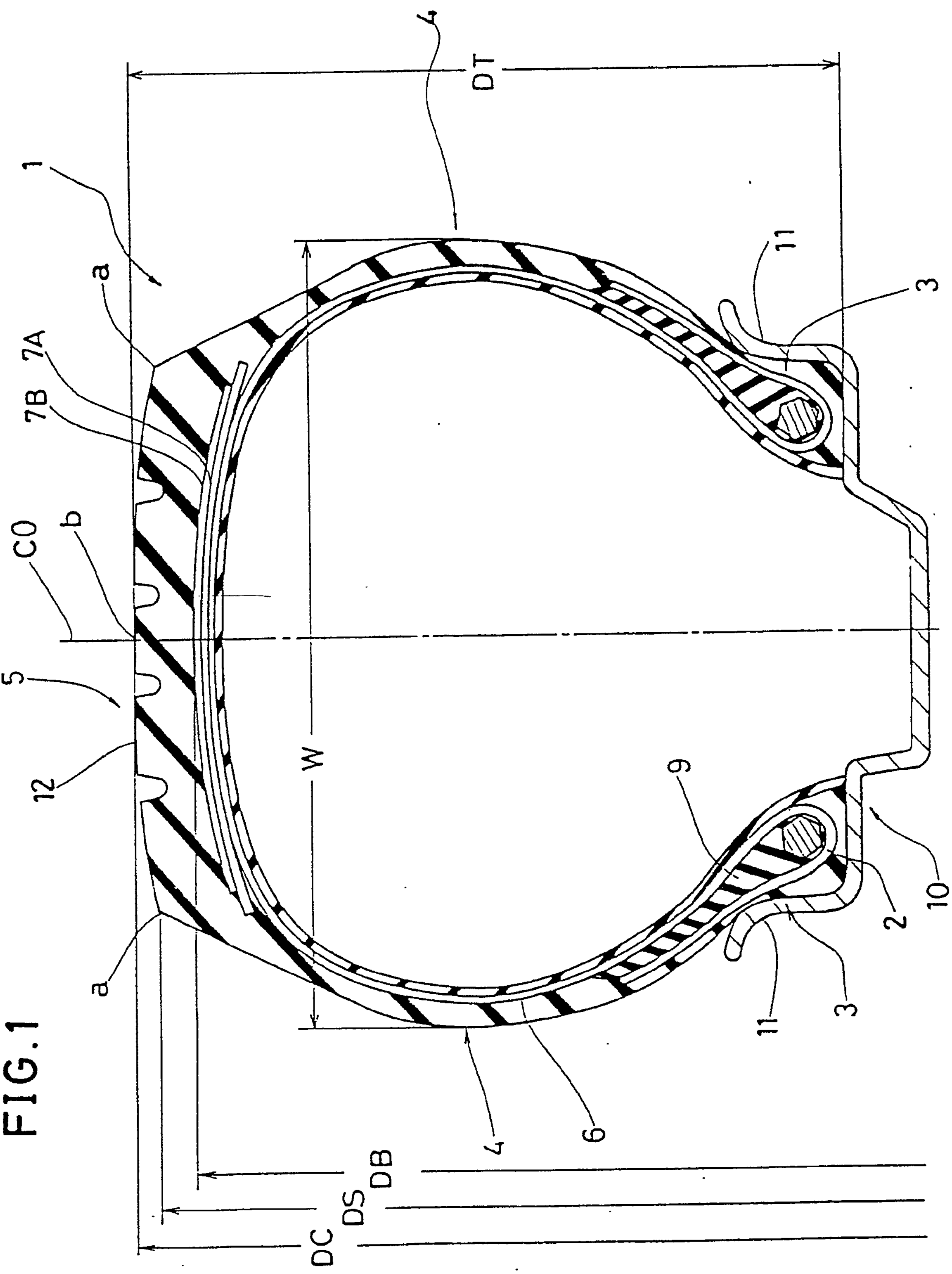

FIG.2

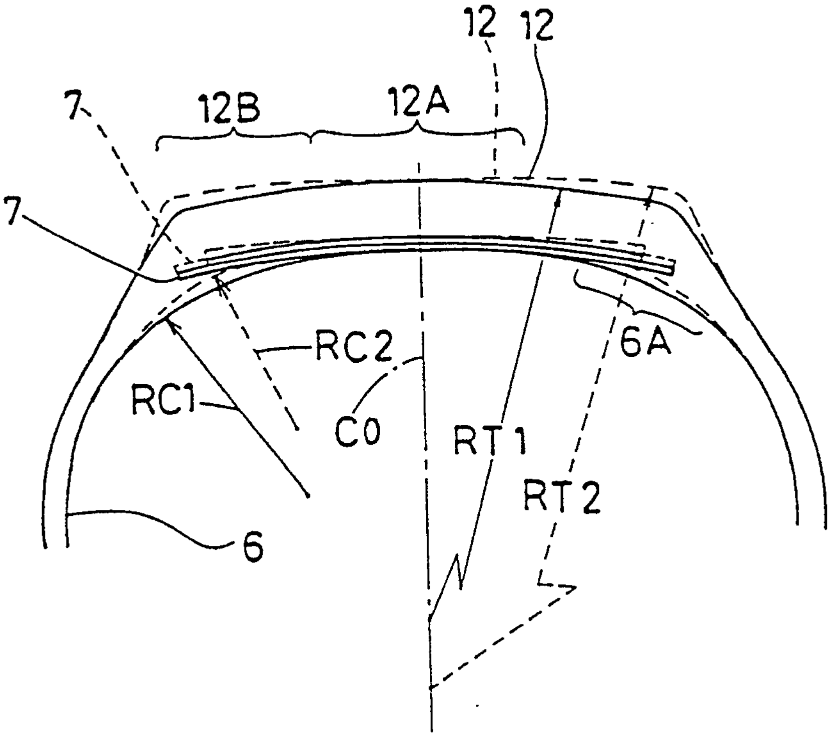


FIG.3

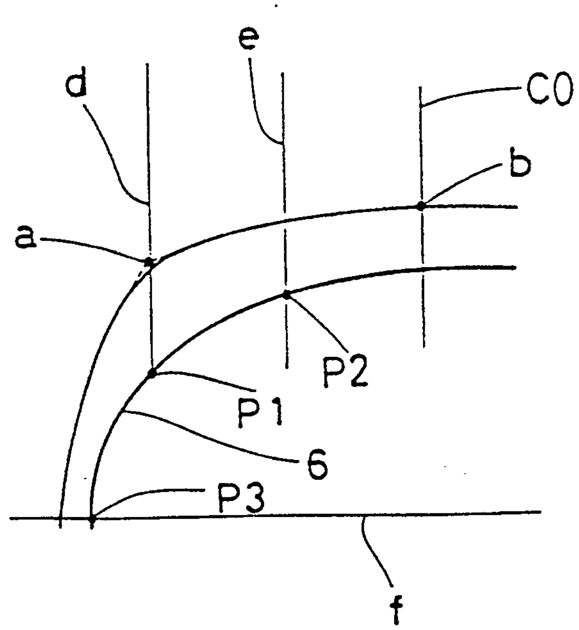

FIG.4

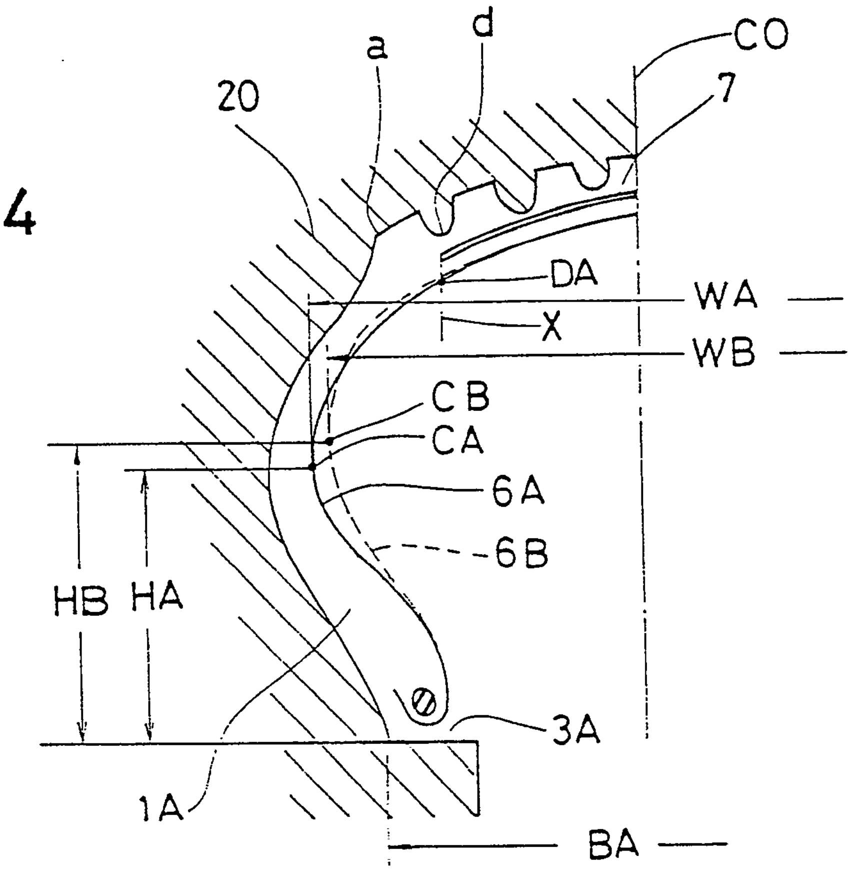


FIG.5

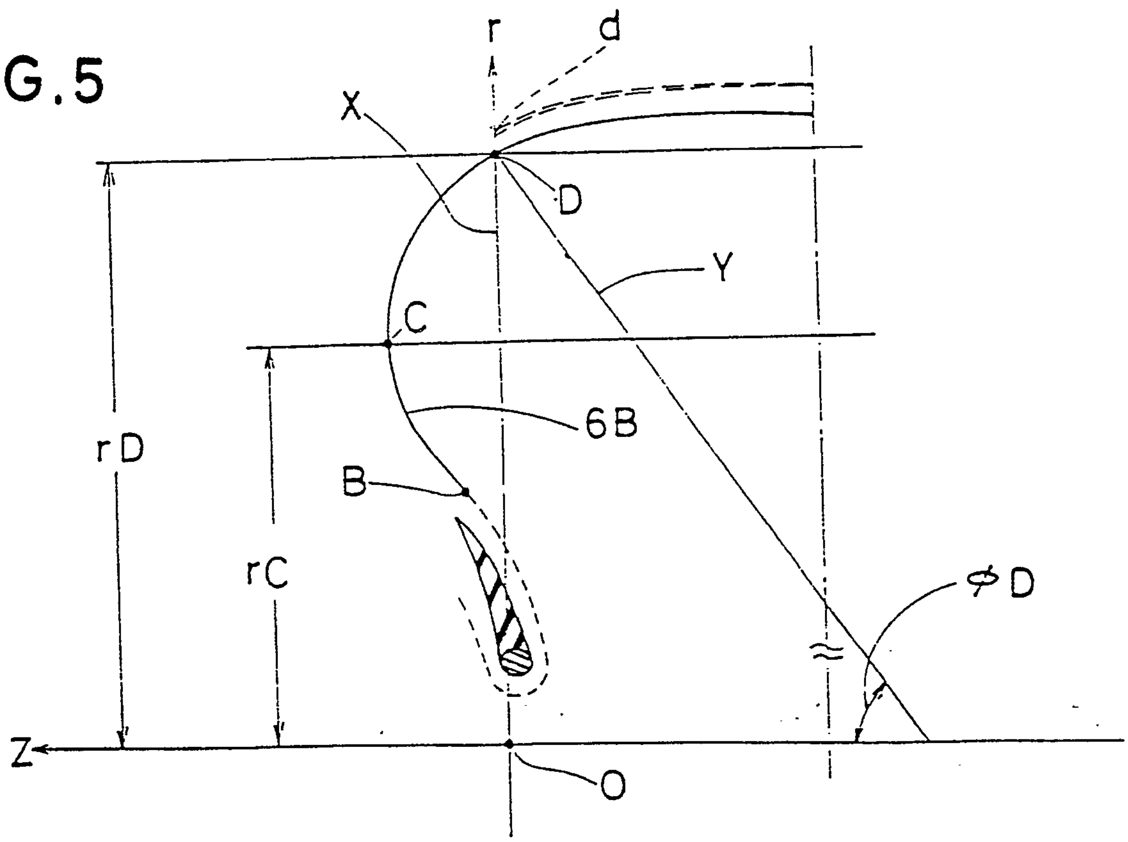

# FIG.6

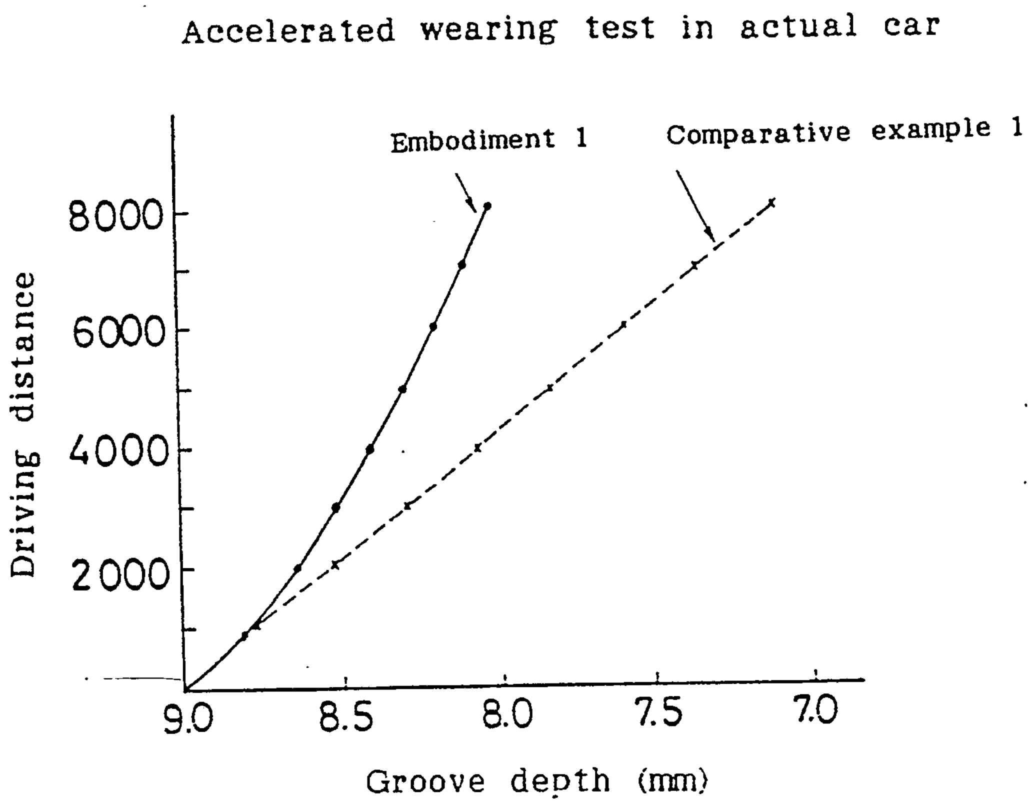
Accelerated wearing test in actual car
Embodiment 1
Comparative example 1
Driving distance
8000
6000
4000
2000
9.0
8.5
8.0
7.5
7.0
Groove depth (mm)

# FIG.7

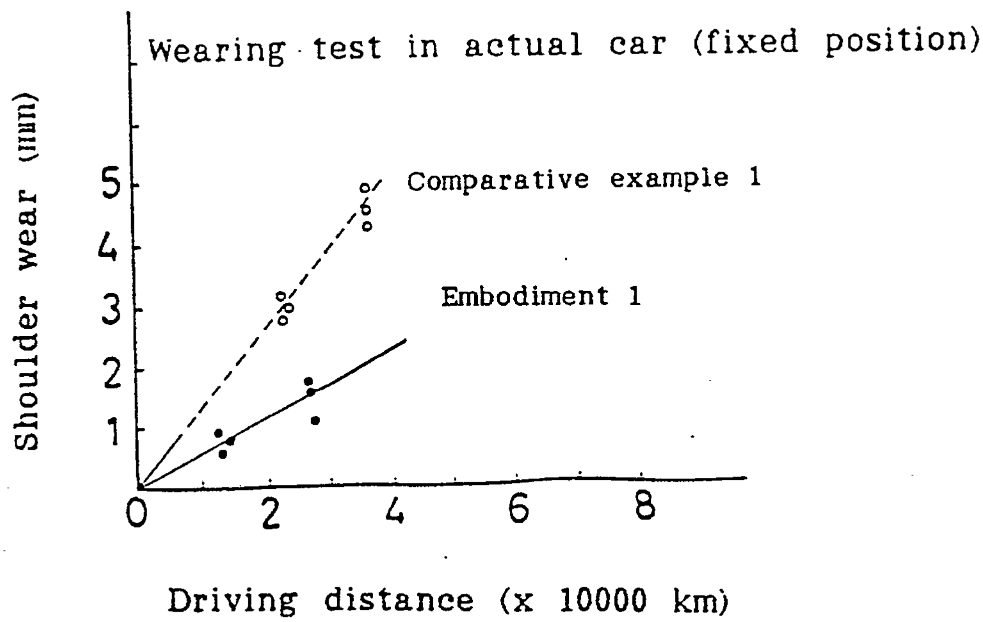
Wearing test in actual car (fixed position)
Shoulder wear (mm)
5
4
3
2
1
Comparative example 1
Embodiment 1
0
2
4
6
8
Driving distance (x 10000 km)

FIG.8